# EUROPÄISCHE PATENTANMELDUNG

(11) **EP 1 057 577 A2**
(43) Veröffentlichungstag der Anmeldung: **06.12.2000**
(21) Anmeldenummer: 00110706.9
(22) Anmeldetag: 19.05.2000
(51) Int. Cl.: B23K 26/00

(54) **Verfahren zur Erzeugung einer Schweissnaht-Oberfläche beim Laserstrahlschweissen, die für die korrosionssichere Aufbringung eines Oberflächenschutzsystems geeignet ist**

(30) Priorität: 31.05.1999 DE 19924905
(71) Anmelder: DaimlerChrysler AG, 70567 Stuttgart (DE)
(72) Erfinder: Müller-Hummel, Peter, 89275 Elchingen (DE); Kullick, Manfred, 83052 Bruckmühl (DE); Melchiorre, Michele, 89275 Elchingen (DE)

(57) **Zusammenfassung**

Verfahren zur Erzeugung einer Schweißnaht-Oberfläche beim Laserstrahlschweißen, die für die korrosionssichere Aufbringung eines Oberflächenschutzsystems geeignet ist, bei dem in einem ersten Verfahrenschritt ein Tiefschweißen erfolgt und in einem zweiten Verfahrensschritt die beim Tiefschweißen entstandene Schweißraupe nochmals mit im Vergleich zum ersten Verfahrensschritt geringerer Laserleistung überfahren wird, wobei der jeweils überfahrene Bereich der Schweißraupe über den gesamten Querschnitt aufgeschmolzen wird.

## Beschreibung

Die Erfindung betrifft ein Verfahren zur Erzeugung einer Schweißnaht-Oberfläche beim Laserstrahlschweißen, die für die korrosionssichere Aufbringung eines Oberflächenschutzsystems geeignet ist.

Die durch das Laserschweißen erzeugten Schweißnähte oder Schweißraupen können im Gesamtbereich der Schweißnahtoberfläche Mikro-Risse, offene Poren, Unebenheiten und sonstige Unregelmäßigkeiten aufweisen.

Nach dem Schweißen und eventuell folgender Bearbeitungsschritte erfolgen vor Aufbringung eines Oberflächenschutzsystems in der Regel eine Reinigung und ein Beizen des geschweißten Bauteils mit entsprechend agressiven Beizlösungen. Solche Beizmittel können zum Teil nicht mehr aus den offenen Poren, Mikro-Rissen, Unebenheiten und sonstigen Unregelmäßigkeiten entfernt werden und bewirken an diesen Stellen in der nachfolgenden Zeit Korrosion. Für hochbelastete Bauteile können solche Korrosionsstellen durch Riß-Initiierung zum schnellen Versagen des Bauteils führen. Aus diesem Grund ist ein Einsatz von geschweißten Bauteilen mit derartigen Merkmalen im Flugzeughallenbau nicht zulässig. Ein weiterer Nachteil liegt in den hohen Folgekosten zur Beseitigung von entstandenen Korrosionsschäden.

Um die potentiellen Korrosionsstellen auf Laserstrahl-Schweißnähte zu vermeiden, könnten nach dem Schweißen spanabhebende Verfahrensschritte, z.B. mittels Schleifmaterial eingeführt werden. Nachteil eines solchen Verfahrens ist jedoch, daß mit diesem ein großer Aufwand verbunden ist, da das Werkstück oder Bauteil erneut einzuspannen ist. Ein weiterer Nachteil ist, daß bei diesem Verfahren nicht ausgeschlossen werden kann, daß dicht unter der Oberfläche liegende innere Poren angeschnitten werden, die wiederum anschließend Korrosion verursachen können.

Bei einer speziellen Anordnung, bei der die Stoßflächen von zwei Blechen versetzt zueinander gelegen sind, so daß eine Kante der Stoßfläche eines der Bleche eine freiliegende Kante ausbildet, wird in der EP 0 771 606 A2 vorgeschlagen, eine Schweißvorrichtung zu schaffen, bei der eine Aufteilung des von einer Strahlenquelle generierten Schweißstrals in zwei Teilstrahlen und eine Fokussierung derselben nahe beieinander erfolgt. Einer dieser Schweißstrahlen wird dabei in kurzem Abstand synchron hinter dem anderen Laserstrahl geführt und auf die freiliegende Kante gerichtet. Dadurch wird eine zweite Schweißnahtlage erzeugt, die zu einer Verrundung der Kante führt. Auf diese Weise wird eine weitgehend gleichmäßige Dicke der Lackschicht im Bereich der freiliegenden Kante erreicht.

Aus der EP 0 594 210 A1 ist ein Schweißverfahren bekannt, bei dem der Schweißstrahl schräg auf die Oberfläche des bestrahlten Werkstücks gerichtet wird, so daß der Querschnitt des Schweißstrahls auf dem Werkstück eine elliptische Form aufweist. Dadurch werden die Anzahl und die Größe von Erstarrungsrissen in der Schweißnaht reduziert.

Es ist daher eine Aufgabe der Erfindung, eine Maßnahme zu schaffen, durch die die Korrosion von Schweißraupen wesentlich vermindert wird und die mit möglichst geringem Aufwand durchführbar ist.

Diese Aufgabe wird mit den Merkmalen des kennzeichnenden Teils des Anspruchs 1 gelöst. Weitere Ausführungsbeispiele sind in den Unteransprüchen angegeben.

Mit dem erfindungsgemäßen Verfahren wird auf prozeßsichere, zeitsparende und damit kostengünstige Weise die Bildung potentieller Korrosionsstellen vermieden.

Im folgenden wird die Erfindung beschrieben:

Beim Laserschweißen, z.B beim Nd:YAG-Laserschweißen ist die Schweißraupe aus einer Aluminium-Legierung, z.B. Al Si (12) vermischt mit dem Grundstoff, gebildet. Dieses Material ist beliebig oft aufschmelzbar. Nach dem erfindungsgemäßen Verfahren (Tiefschweißen) wird ein sogenanntes Wärmeleitungs-Schweißen durchgeführt. Dabei wird die beim Tiefschweißen gebildete Schweißraupe nochmals mit dem Schweißgerät mit geringerer Laserleistung in einer Weise überfahren, daß die Schweißraupe an der jeweils überfahrenen Stelle oberflächlich aufgeschmolzen wird. Nach dem Abkühlen bildet sich eine weitgehend glatte Oberfläche ohne Unebenheiten wie Poren oder Einschlüsse aus.

Der zur Verbindung der Bauteile vorgesehene erste Schweißvorgang kann mit einem Schweißgerät oder gleichzeitig mit mehreren Schweißgeräten simultlan, nebeneinander oder hintereinander erfolgen. Jedes Laserschweißgerät liegt dabei vorzugsweise in einem Leistungsbereich zwischen 1500 und 10000 Watt. Zur Durchführung des erfindungsgemäßen zweiten Schweißvorgangs (Wärmeleit-Schweißen) wird mit einer reduzierten Leistung für jedes dafür vorgesehene Schweißgerät gearbeitet. Der reduzierte Leistungsbereich liegt dabei im Bereich zwischen 400 bis 1200 Watt je Schweißgerät. Unabhängig davon, wieviele Schweißgeräte im ersten Verfahrenschritt (Tiefschweißen) simultan, hintereinander oder nebeneinander im Einsatz waren, kann im zweiten Schweißdurchgang (Wärmeleit-Schweißen) der Einsatz eines oder mehrerer Schweißgeräte simultan, hintereinander oder nebeneinander vorgesehen sein.

Das erfindungsgemäße Verfahren eignet sich insbesondere bei automatisch vorgenommenen Schweißverfahren. Bei diesen kann das im vorangegangenen Verfahrenschritt verschweißte Bauteil in seiner bereits vorgenommenen Einspannung verbleiben. Auch kann die Einstellung der Zustellorgan der Schweißgeräte bestehen bleiben, so daß der Schweißkopf die Schweißraupe innerhalb kurzer Zeit nochmals überfahren kann. Dadurch entsteht durch das erfindungsgemäße Verfahren nur ein geringer Mehraufwand im Vergleich zum bloßen Schweißverfahren und einer mechanischen Nacharbeit.

## Patentansprüche

1. Verfahren zur Erzeugung einer Schweißnaht-Oberfläche beim Laserstrahlschweißen, die für die korrosionssichere Aufbringung eines Oberflächenschutzsystems geeignet ist, bei dem in einem ersten Verfahrensschritt ein Tiefschweißen erfolgt und in einem zweiten Verfahrensschritt die beim Tiefschweißen entstandene Schweißraupe nochmals mit im Vergleich zum ersten Verfahrensschritt geringerer Laserleistung zum Wärmeleit-Schweißen überfahren wird, wobei der jeweils überfahrene Bereich der Schweißraupe über den gesamten Querschnitt oder Bereiche davon , aufgeschmolzen wird.

2. Verfahren zur Erzeugung einer Schweißnaht-Oberfläche beim Laserstrahlschweißen, die für die korrosionssichere Aufbringung eines Oberflächenschutzsystems geeignet ist nach dem Anspruch 1, **dadurch gekennzeichnet,** daß die geringere Laserleistung im Bereich zwischen 400 und 1200 Watt liegt.

3. Verfahren zur Erzeugung einer Schweißnaht-Oberfläche beim Laserstrahlschweißen, die für die korrosionssichere Aufbringung eines Oberflächenschutzsystems geeignet ist nach dem Anspruch 1 oder 2, **dadurch gekennzeichnet,** daß beim Tiefschweißen ein einzelnes Laserschweiß-Gerät eingesetzt wird.

4. Verfahren zur Erzeugung einer Schweißnaht-Oberfläche beim Laserstrahlschweißen, die für die korrosionssichere Aufbringung eines Oberflächenschutzsystems geeignet ist nach dem Anspruch 1 oder 2, **dadurch gekennzeichnet,** daß beim Tiefschweißen mehrere Laserschweiß-Geräte eingesetzt werden.

5. Verfahren zur Erzeugung einer Schweißnaht-Oberfläche beim Laserstrahlschweißen, die für die korrosionssichere Aufbringung eines Oberflächenschutzsystems geeignet ist nach einem der voranstehenden Ansprüche, **dadurch gekennzeichnet,** daß beim Wärmeleit-Schweißen ein einzelnes Laserschweiß-Gerät eingesetzt wird.

6. Verfahren zur Erzeugung einer Schweißnaht-Oberfläche beim Laserstrahlschweißen, die für die korrosionssichere Aufbringung eines Oberflächenschutzsystems geeignet ist nach einem der Ansprüche 1 bis 4, **dadurch gekennzeichnet,** daß beim Wärmeleit-Schweißen mehrere Laserschweiß-Geräte hintereinander eingesetzt werden.

7. Verfahren zur Erzeugung einer Schweißnaht-Oberfläche beim Laserstrahlschweißen, die für die korrosionssichere Aufbringung eines Oberflächenschutzsystems geeignet ist nach einem der Ansprüche 1, 2, 3, 4 oder 6, **dadurch gekennzeichnet,** daß beim Wärmeleit-Schweißen mehrere Laserschweiß-Geräte nebeneinander eingesetzt werden.
